# EUROPÄISCHE PATENTSCHRIFT

(11) **EP 1 135 007 B1**
(45) Veröffentlichungstag und Bekanntmachung des Hinweises auf die Patenterteilung: **16.04.2003**
(21) Anmeldenummer: 01104817.0
(22) Anmeldetag: 27.02.2001
(51) Int. Cl.: H05B 39/04, H05B 39/08

(54) **Elektronischer Dimmer und Verfahren zum Betreiben des Dimmers**
Electronic dimmer and process for carrying out the dimming
Dimmer électronique et procédé pour mettre en oeuvre

(30) Priorität: 17.03.2000 DE 10013018
(43) Veröffentlichungstag der Anmeldung: 19.09.2001
(73) Patentinhaber: ABB PATENT GmbH, 68526 Ladenburg (DE)
(72) Erfinder: Clever, Gerd, 58553 Halver (DE); Götte, Karsten, 58513 Lüdenscheid (DE)
(74) Vertreter: Miller, Toivo

(56) Entgegenhaltungen:
- DE-A- 3 614 433
- DE-A- 4 231 060
- DE-A- 4 406 371
- DE-U- 29 722 904

## Beschreibung

Die Erfindung bezieht sich auf einen elektronischen Dimmer, sowie auf ein Verfahren zum Betreiben des Dimmers zur Helligkeitssteuerung von Lampen, bei dem der jeweilige Zeitpunkt des Nulldurchgangs des Netzwechselspannung oder des Laststromes als Bezugspunkt zur Synchronisation und zur Berechnung und Einstellung der Stromflußzeit und damit der Helligkeit herangezogen wird.

Die Netzfrequenz ist zwar weitgehend konstant, kann jedoch von kurzzeitig auftretenden Störgrößen, wie z.B. durch Rundsteuersignale oder Überspannungsspitzen, beeinflußt werden. Die dadurch bedingten ungleichen Abstände der Nulldurchgänge führen zu unerwünschten Helligkeitsschwankungen (flackern, flimmern), besonders wenn der Dimmer auf eine geringe Helligkeit eingestellt ist.

In DE 44 06 371 A1 ist ein Verfahren zur Helligkeitssteuerung beschrieben, bei dem ein im Rahmen der Steuerung verwendeter Integrierer in jedem Nulldurchgang der Netzspannung zurückgesetzt wird.

Aus DE 36 14 433 A1 sind ein Verfahren und eine Einrichtung zur Helligkeitssteuerung bekannt. Zur Helligkeitssteuerung wird eine elektronische Schaltung verwendet, die unter anderem einen Zähler enthält, der bei jedem Nulldurchgang der Netzspannung gestartet wird. Mittels einer PLL-Schaltung und einem Phasenkomparator wird dabei eine stabilisierte Frequenz zur Bestimmung des Nulldurchgangs herangezogen.

DE 297 22 904 U1 beschreibt eine Dimmerschaltung, bei der Netzspannungs - Nulldurchgänge und Nulldurchgänge der an einer Reihenschaltung von Halbleiterschalter abfallenden Spannung erfaßt werden. Die Nulldurchgänge der Spannung an der Reihenschaltung werden zum Einschalten der Halbleiterschalter genutzt. Abgeschaltet werden diese bei einem bestimmten Phasenwinkel, der auf den Netzspannungs - Nulldurchgang bezogen ist.

Weiterhin ist aus DE 42 31 060 A1 ein Dimmer bekannt, der aus einem Schaltungs-Chip mit einer Beschaltung durch passive Bauelemente besteht. Der Chip enthält eine Steuerschaltung, die mit einer Temperaturüberwachung, einer Stromüberwachung und einem Nulldurchgangsdetektor zusammenarbeitet. Mittels der externen passiven Bauelemente erfolgt eine nicht weiter beschriebene Synchronisation des Nullspannungsdetektors.

Der Erfindung liegt die Aufgabe zugrunde, ein weiteres Verfahren zum Betreiben eines elektronischen Dimmers, sowie einen nach diesem Verfahren arbeitenden Dimmer anzugeben, bei dem Helligkeitsschwankungen verhindert oder verringert sind.

Diese Aufgabe wird durch ein Verfahren zum Betreiben eines elektronischen Dimmers zur Helligkeitssteuerung von Lampen gelöst, das die im Anspruch 1 angegebenen Merkmale aufweist, sowie durch einen Dimmer gemäß dem Anspruch 3. Vorteilhafte Ausgestaltungen sind in weiteren Ansprüchen angegeben.

Mit der Erfindung wird im wesentlichen vorgeschlagen, anstelle des tatsächlichen Nulldurchgangs einen mittels einer Korrekturfunktion berechneten Nulldurchgang heranzuziehen.

Eine weitere Beschreibung der Erfindung erfolgt nachstehend anhand eines in Zeichnungsfiguren dargestellten Ausführungsbeispiels.

Es zeigen:
- Fig. 1: eine Darstellung des zeitlichen Ablaufs tatsächlicher und korrigierter Nulldurchgänge,
- Fig. 2: ein Blockdiagramm der Korrekturfunktion, und
- Fig. 3: ein Detailblockschaltbild einer bevorzugten Korrekturfunktion.

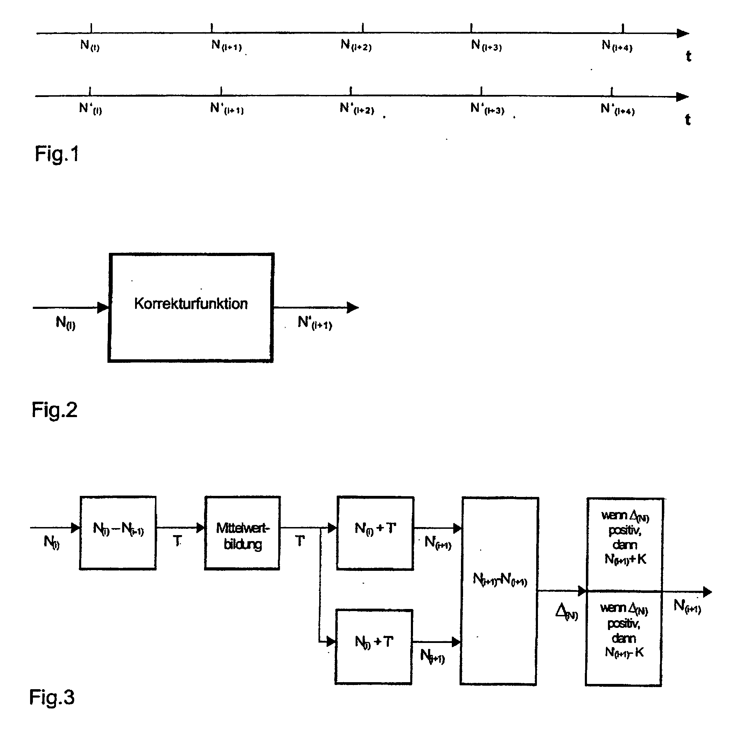

Fig. 1 zeigt in der oberen Zeile Nulldurchgangs-Zeitpunkte Nᵢ einer nicht stabilen Netzspannung, in der unteren Zeile korrigierte, also weitgehend gleichmäßige Nulldurchgänge Nᵢ'.

Fig. 2 zeigt das prinzipielle Blockdiagramm einer Korrekturfunktion, wobei erfaßte tatsächliche Nulldurchgänge Nᵢ der Netzspannung oder des Laststromes als Eingangsgröße verwendet sind. Ausgangsgröße ist der unter Durchführung einer Korrekturfunktion korrigierte jeweils nächste Nulldurchgang N₍ᵢ₊₁₎.

Eine geeignete Korrekturfunktion ist in Fig. 3 dargestellt. Diese Korrekturfunktion ist in mehrere Zwischenschritte unterteilt:
a) Berechnung der aktuellen Periodendauer T mittels der Formel T = N₍ᵢ₋₁₎ - N₍ᵢ₎;
b) Berechnung der mittleren Periodendauer T';
c) Berechnung des nächsten korrigierten Nulldurchgangs N'₍ᵢ₊₁₎ = N'₍ᵢ₎ + T';
d) Berechnung des nächsten unkorrigierten Nulldurchgangs N₍ᵢ₊₁₎ = N₍ᵢ₎ + T';
e) Berechnung der Zeitdifferenz zwischen dem nächsten unkorrigierten Nulldurchgang und dem nächsten korrigierten Nulldurchgang: Δ_{(Ni)} = N₍ᵢ₊₁₎ - N'₍ᵢ₊₁₎;
f) Vergrößern des korrigierten Nulldurchgangs N'₍ᵢ₊₁₎ um eine Konstante K, wenn Δ_{(Ni)} positiv war und verkleinern des korrigierten Nulldurchgangs N'₍ᵢ₊₁₎ um die Konstante K, wenn Δ_{(Ni)} negativ war.

Der geeignete Wert der Konstante K wird empirisch ermittelt.

Ein nicht in der Zeichnung dargestellter elektronischer Dimmer, bei dem das erfindungsgemäße Verfahren verwendet ist, enthält einen Prozessor, der einen Programmteil zur Durchführung der Korrekturfunktion und zur Verwendung des damit korrigierten Nulldurchgangs enthält.

## Patentansprüche

1. Verfahren zum Betreiben eines elektronischen Dimmers zur Helligkeitssteuerung von Lampen, bei dem der jeweilige Zeitpunkt des Nulldurchgangs Nᵢ der Netzwechselspannung - oder des Laststromes - zur Berechnung und Einstellung der Stromflußzeit und damit der Helligkeit herangezogen wird, **dadurch gekennzeichnet, daß** zur Stabilisierung des Dimmerbetriebs, auch im Fall von Netzfrequenzschwankungen, anstelle des tatsächlichen Zeitpunkts des Nulldurchgangs N; jeweils ein mittels einer Korrekturfunktion errechneter Zeitpunkt eines virtuellen Nulldurchgangs N'ᵢ verwendet wird.

2. Verfahren nach Anspruch 1, **dadurch gekennzeichnet, daß** die Korrekturfunktion nachstehende Berechnungsschritte enthält:
a) Berechnung der aktuellen Periodendauer T mittels der Formel T = N₍ᵢ₋₁₎ - N₍ᵢ₎;
b) Berechnung der mittleren Periodendauer T';
c) Berechnung des nächsten korrigierten Nulldurchgangs N'₍ᵢ₊₁₎₌ N'₍ᵢ₎+ T';
d) Berechnung des nächsten unkorrigierten Nulldurchgangs N₍ᵢ₊₁₎ = N₍ᵢ₎ + T';
e) Berechnung der Zeitdifferenz zwischen dem nächsten unkorrigierten Nulldurchgang und dem nächsten korrigierten Nulldurchgang: Δ_{(Ni)} = N₍ᵢ₊₁₎ - N'₍ᵢ₊₁₎;
f) Vergrößern des korrigierten Nulldurchgangs N'₍ᵢ₊₁₎ um eine Konstante K, wenn Δ_{(Ni)} positiv war und verkleinern des korrigierten Nulldurchgangs N' ₍ᵢ₊₁₎ um die Konstante K, wenn Δ_{(Ni)} negativ war.

3. Elektronischer Dimmer zur Helligkeitssteuerung von Lampen, der dafür eingerichtet ist, zur Berechnung und Einstellung der Stromflußzeit den jeweiligen Zeitpunkt des Nulldurchgangs Nᵢ der Netzwechselspannung oder des Laststromes zu verwenden, **dadurch gekennzeichnet, daß** der Dimmer mittels eines Prozessors dafür eingerichtet ist, zur Stabilisierung des Dimmerbetriebs, auch im Fall von Netzfrequenzschwankungen, anstelle des tatsächlichen Zeitpunkts des Nulldurchgangs Nᵢ jeweils einen mittels einer Korrekturfunktion errechneten Zeitpunkt eines virtuellen Nulldurchgangs Nᵢ' zu verwenden, wobei dieser mittels eines im Prozessor enthaltenen Programmteils durchgeführt wird.

4. Elektronischer Dimmer nach Anspruch 3, **dadurch gekennzeichnet, daß** er mittels des im Prozessor enthaltenen Programmteils dafür eingerichtet ist, eine Korrekturfunktion zu verwenden, die nachstehende Berechnungsschritte enthält:
a) Berechnung der aktuellen Periodendauer T mittels der Formel T = N'₍ᵢ₋₁₎ - N₍ᵢ₎;
b) Berechnung der mittleren Periodendauer T';
c) Berechnung des nächsten korrigierten Nulldurchgangs N'₍ᵢ₊₁₎₌ N'₍ᵢ₎+T';
d) Berechnung des nächsten unkorrigierten Nulldurchgangs N₍ᵢ₊₁₎ = N₍ᵢ₎ + T';
e) Berechnung der Zeitdifferenz zwischen dem nächsten unkorrigierten Null durchgang und dem nächsten korrigierten Nulldurchgang: Δ_{(Ni)} = N₍ᵢ₊₁₎ - N'₍ᵢ₊₁₎;
f) Vergrößern des korrigierten Nulldurchgangs N'₍ᵢ₊₁₎ um eine Konstante K, wenn Δ_{(Ni)} positiv war und verkleinern des korrigierten Nulldurchgangs N'₍ᵢ₊₁₎ um die Konstante K, wenn Δ_{(Ni)} negativ war.

## Claims

1. Method for operating an electronic dimmer for the brightness control of lamps, in the case of which the respective instant of the zero crossing Nᵢ of the AC supply voltage - or the load current - is used for calculating and setting the conducting interval and thus the brightness, **characterized in that** in order to stabilize the dimmer operation even in the case of system frequency fluctuations, instead of the actual instant of the zero crossing Nᵢ use is made in each case of an instant, calculated by means of a correction function, of a virtual zero crossing N'ᵢ.

2. Method according to Claim 1, **characterized in that** the correction function includes the following calculating steps:
a) calculation of the current period T by means of the formula T = N₍ᵢ₋₁₎ - N₍ᵢ₎;
b) calculation of the mean period T';
c) calculation of the next corrected zero crossing N'₍ᵢ₊₁₎ = N'₍ᵢ₎ + T';
d) calculation of the next uncorrected zero crossing N₍ᵢ₊₁₎ = N₍ᵢ₎ + T';
e) calculation of the time difference between the next uncorrected zero crossing and the next corrected zero crossing: Δ_{(Ni)} = N₍ᵢ₊₁₎ - N'₍ᵢ₊₁₎; and
f) increasing the corrected zero crossing N'₍ᵢ₊₁₎ by a constant K if Δ_{(Ni)} was positive, and reducing the corrected zero crossing N'₍ᵢ₊₁₎ by the constant K if Δ_{(Ni)} was negative.

3. Electronic dimmer for the brightness control of lamps, which is set up to use the respective instant of the zero crossing Nᵢ of the AC supply voltage or of the load current in order to calculate and set the conducting interval, **characterized in that** by means of a processor the dimmer is set- up in order to stabilize the dimmer operation even in the case of system frequency fluctuations, instead of the actual instant of the zero crossing Nᵢ to use in each case of an instant, calculated by means of a correction function, of a virtual zero crossing Nᵢ', this being carried out by means. of a program part contained in the processor.

4. Electronic dimmer according to Claim 3, **characterized in that** by means of the program part contained in the processor it is set up to use a correction function which encloses the following calculating steps:
a) calculation of the current period T by means of the formula T = N'₍ᵢ₋₁₎ [sic] - N₍ᵢ₎;
b) calculation of the mean period T';
c) calculation of the next corrected zero crossing N'₍ᵢ₊₁₎ = N'₍ᵢ₎ + T';
d) calculation of the next uncorrected zero crossing N₍ᵢ₊₁₎ = N₍ᵢ₎ + T';
e) calculation of the time difference between the next uncorrected zero crossing and the next corrected zero crossing: Δ_{(Ni)} = N₍ᵢ₊₁₎ - N'₍ᵢ₊₁₎ ; and
f) increasing the corrected zero crossing N'₍ᵢ₊₁₎ by a constant K if Δ_{(Ni)} was positive, and reducing the corrected zero crossing N'₍ᵢ₊₁₎ by the constant K if Δ_{(Ni)} was negative.

## Revendications

1. Procédé pour faire fonctionner un variateur de lumière électronique pour contrôler la luminosité de lampes, dans lequel on utilise l'instant du passage par zéro Nᵢ de la tension du réseau - ou du courant de charge - pour calculer et pour régler la durée de passage du courant et par conséquent la luminosité, **caractérisé en ce que** pour stabiliser le fonctionnement du variateur, même dans le cas de fluctuations de la fréquence du réseau, on utilise à la place de l'instant réel du passage par zéro Nᵢ un instant calculé à l'aide d'une fonction de correction d'un passage par zéro N'ᵢ virtuel.

2. Procédé selon la revendication 1, **caractérisé en ce que** la fonction de correction comprend les étapes de calcul suivantes:
a) calcul de la période T actuelle à l'aide de la formule T=N₍ᵢ₋₁₎-N₍ᵢ₎;
b) calcul de la période moyenne T';
c) calcul du prochain passage par zéro corrigé N'₍ᵢ₊₁₎=N'₍ᵢ₎+T';
d) calcul du prochain passage par zéro non corrigé N₍ᵢ₊₁₎=N₍ᵢ₎+T';
e) calcul de la différence de temps entre le prochain passage par zéro non corrigé =N₍ᵢ₎+T' et le prochain passage par zéro corrigé Δ_{(Ni)}=N₍ᵢ₊₁₎-N'₍ᵢ₊₁₎;
f) augmentation du passage par zéro corrigé N'₍ᵢ₊₁₎ d'une constante K, lorsque Δ_{(Ni)} était positive et diminution du passage par zéro corrigé N'₍ᵢ₊₁₎ de la constante K, lorsque Δ_{(Ni)} était négative.

3. Variateur de lumière électronique pour contrôler la luminosité de lampes, qui, pour le calcul et le réglage de la durée de passage du courant, est agencé pour utiliser l'instant du passage par zéro Nᵢ de la tension du réseau ou du courant de charge, **caractérisé en ce que**, dans le but de stabiliser le fonctionnement du variateur même dans le cas de fluctuations de la fréquence du réseau, le variateur, grâce à un processeur, est agencé pour utiliser à la place de l'instant réel du passage par zéro Nᵢ, un instant d'un passage par zéro N'ᵢ virtuel calculé à l'aide d'une fonction de correction, ceci étant réalisé à l'aide d'une partie de programme contenue dans le processeur.

4. Variateur de lumière électronique, selon la revendication 3, **caractérisé en ce que**, grâce à la partie de programme contenue dans le processeur, le variateur est agencé pour utiliser une fonction de correction, qui comprend les étapes de calcul suivantes:
a) calcul de la période T actuelle à l'aide de la formule T=N₍ᵢ₋₁₎-N₍ᵢ₎;
b) calcul de la période moyenne T';
c) calcul du prochain passage par zéro corrigé N'₍ᵢ₊₁₎=N'₍ᵢ₎+T';
d) calcul du prochain passage par zéro non corrigé N₍ᵢ₊₁₎=N₍ᵢ₎+T';
e) calcul de la différence de temps entre le prochain passage par zéro non corrigé et le prochain passage par zéro corrigé Δ_{(Ni)}=N₍ᵢ₊₁₎-N'₍ᵢ₊₁₎;
f) augmentation du passage par zéro corrigé N'₍ᵢ₊₁₎ d'une constante K, lorsque Δ_{(Ni)} était positive et diminution du passage par zéro corrigé N'₍ᵢ₊₁₎ de la constante K, lorsque Δ_{(Ni)} était négative.
